# EUROPEAN PATENT APPLICATION

(11) **EP 4 738 855 A1**
(43) Date of publication of application: **06.05.2026**
(21) Application number: 24849459.3
(22) Date of filing: 24.07.2024
(51) Int. Cl.: H04N 23/45, H04N 23/57, H04N 23/69, H04N 23/62, H04N 5/77, H04N 5/92, H04N 5/926

(54) **ELECTRONIC DEVICE COMPRISING CAMERA AND OPERATION METHOD THEREFOR**

(30) Priority: 01.08.2023 KR 20230100580; 20.10.2023 KR 20230141430
(71) Applicant: Samsung Electronics Co., Ltd., Suwon-si, Gyeonggi-do 16677 (KR)
(72) Inventor: AN, Gyushik, Suwon-si Gyeonggi-do 16677 (KR); KIM, Bosung, Suwon-si Gyeonggi-do 16677 (KR); KIM, Hyunsoo, Suwon-si Gyeonggi-do 16677 (KR); PARK, Kyoungkeun, Suwon-si Gyeonggi-do 16677 (KR); LEE, Kyungil, Suwon-si Gyeonggi-do 16677 (KR); LIM, Jeongkyu, Suwon-si Gyeonggi-do 16677 (KR)
(74) Representative: Nederlandsch Octrooibureau
(86) International application number: PCT/KR2024/010705
(87) International publication number: WO 2025/028890

(57) **Abstract**

An electronic device according to various embodiments may comprise: a first camera; a second camera distinguished from the first camera; a memory for storing instructions; and at least one processor. The at least one processor may be configured to: receive a first user input for requesting to capture a video; store first video data including a first track and a second track based on the user input, wherein the first track includes at least a part of first image frames acquired through the first camera, and the second track includes at least a part of second image frames acquired through the second camera; and acquire second video data including an image frame acquired from the first track or the second track of the stored first video data. Various other embodiments identified in the present document are possible.

## Description

### [Technical Field]

The disclosure relates to an electronic device including a camera and an operation method therefor.

### [Background Art]

An electronic device may acquire image data by using a camera (e.g., a digital camera including an image sensor). For example, a smartphone, a computer device, a portable multimedia device, a portable medical device, a wearable device, or a home appliance may include one or more cameras. The electronic device may capture a still image or a video by using the camera.

A camera may capture an image, based on a field of view (FoV) according to the characteristics of an optical system and a focal length corresponding to the field of view. An electronic device may include multiple cameras having different fields of view and different focal lengths in order to capture images under various conditions. The field of view may be determined based on an angle of view enabling an image to be formed on an image sensor by the optical system of the camera.

The above-described information may be provided as related art for the purpose of assisting in understanding the disclosure. None of the above contents make an assertion or decision as to whether any of the above might be applicable as prior art with regard to the disclosure.

### [Disclosure of Invention]

### [Solution to Problem]

An electronic device according to an embodiment may include a first camera, a second camera having a focal length different from that of the first camera, a memory configured to store instructions, and at least one processor. The at least one processor may be configured to execute the instructions to receive a first user input of requesting to capture a video. The at least one processor may be configured to store first video data including a first track and a second track, based on the user input. The first track may include at least a part of first image frames acquired through the first camera, and the second track may include at least a part of second image frames acquired through the second camera. The at least one processor may be configured to acquire second video data including an image frame acquired from the first track or the second track included in the stored first video data.

A method of operating an electronic device according to an embodiment may include receiving a first user input of requesting to capture a video. The method may further include storing first video data including a first track and a second track, based on the user input. The method may further include acquiring second video data including an image frame acquired from the first track or the second track included in the stored first video data. The first track may include at least a part of first image frames acquired through the first camera, and the second track may include at least a part of second image frames acquired through the second camera.

A non-transitory computer-readable recording medium according to an embodiment may record a computer program, when executed, causing an electronic device to perform the above method.

### [Brief Description of Drawings]

FIG. 1 is a block diagram illustrating an electronic device in a network environment according to various embodiments.
FIG. 2 is a block diagram illustrating the camera module according to various embodiments.
FIG. 3 is a flowchart illustrating a process of capturing a video by an electronic device according to an embodiment.
FIG. 4 is a flowchart illustrating a process of storing first video data by an electronic device, based on a zoom ratio according to an embodiment.
FIG. 5 is a diagram illustrating an example of an image frame included in first video data including multiple tracks, based on a zoom ratio according to an embodiment.
FIG. 6 is a flowchart illustrating a process of acquiring second video data from stored first video data by an electronic device according to an embodiment.
FIG. 7 illustrates an example of a modified zoom ratio determined by an electronic device to apply same to second video data according to an embodiment.
FIG. 8 illustrates an example of a configuration of first video data stored by an electronic device according to an embodiment.
FIG. 9 illustrates an example of metadata stored in first video data by an electronic device and updated metadata according to an embodiment.
FIG. 10 is a flowchart illustrating a process of storing metadata in second video data by an electronic device according to an embodiment.
FIG. 11 conceptually illustrates a method of acquiring second video data by an electronic device, based on selected metadata according to an embodiment.
FIG. 12 is a flowchart illustrating a process of acquiring second video data by an electronic device, based on metadata according to an embodiment.
FIG. 13 illustrates an example of determining, by an electronic device, a region to be cropped from an image frame, based on a time point at which a camera is switched according to an embodiment.
FIG. 14 is a flowchart illustrating a process of generating a video by an electronic device, based on metadata according to an embodiment.
FIG. 15 is a diagram illustrating an example of determining, by an electronic device, an image stored in second video data, based on metadata according to an embodiment.
FIG. 16 is a flowchart illustrating a process of acquiring second video data by an electronic device, based on a region of interest or an object according to an embodiment.
FIG. 17 illustrates an example of a configuration of an electronic device including a wearable device according to an embodiment.
FIG. 18 illustrates an example related to a method of storing first video data by an electronic device including a wearable device according to an embodiment.
FIG. 19 is a flowchart illustrating a process of acquiring second image data by an electronic device, based on an image received from an external device according to an embodiment.
FIG. 20 illustrates elements for configuring an electronic device according to an embodiment.

### [Mode for the Invention]

Hereinafter, embodiments will be described in detail with reference to the accompanying drawings so that those skilled in the art to which the disclosure pertains can easily implement the embodiments. However, the disclosure may be implemented in various different forms and is not limited to embodiments set forth herein.

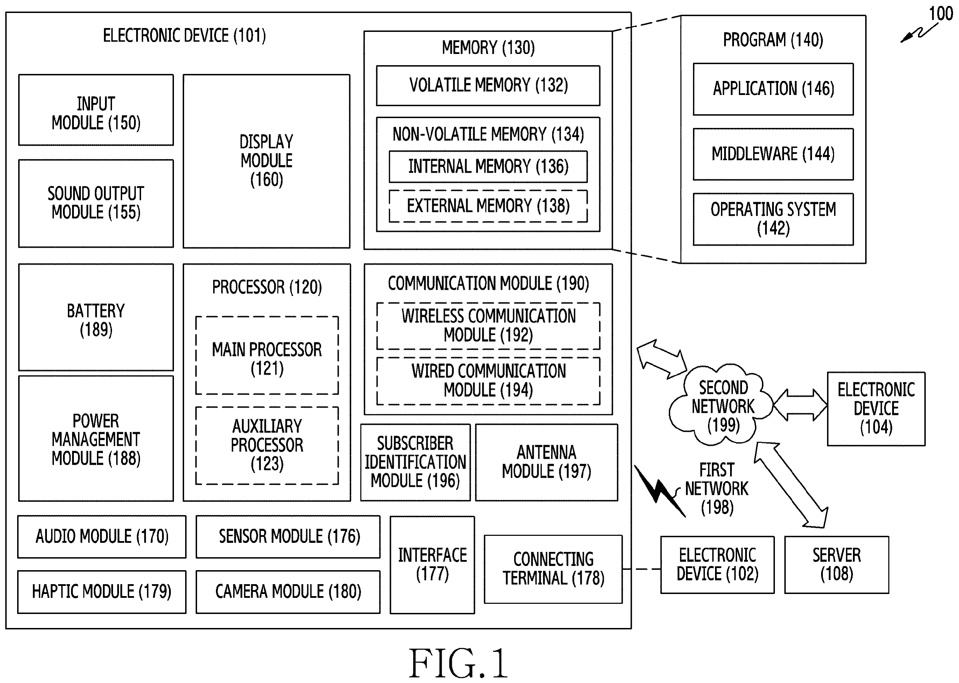

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

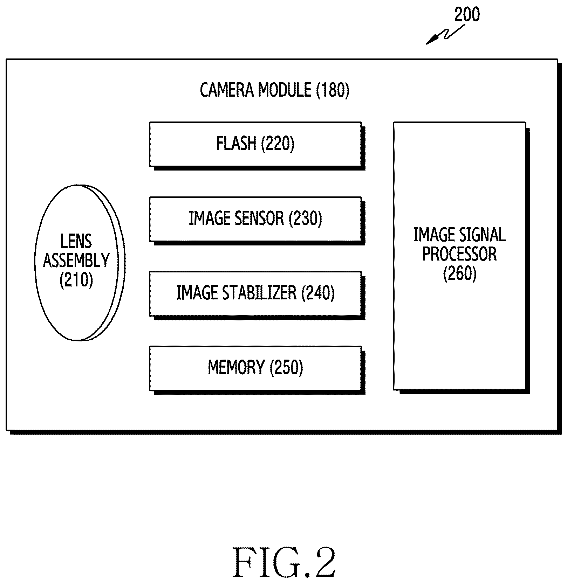

FIG. 2 is a block diagram 200 illustrating the camera module 180 according to various embodiments. Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}₎, or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

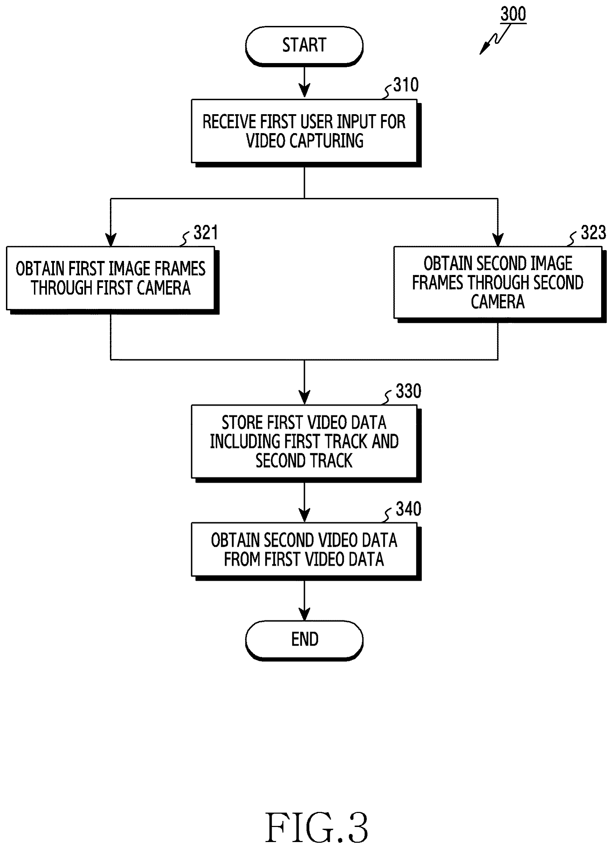

FIG. 3 is a flowchart 300 illustrating a process of capturing a video by the electronic device 101 according to an embodiment. In the disclosure, an operation of the electronic device 101 may be understood as being performed by executing instructions stored in the memory 130 by the at least one processor 120 included in the electronic device 101.

According to an embodiment, in operation 310, the electronic device 101 may receive a first user input for video capturing. For example, the electronic device 101 may execute a camera application. During execution of the camera application, the electronic device 101 may display, through the display module 160, a user interface including a capture button in a video capturing mode. The electronic device 101 may receive a first user input of selecting the displayed capture button.

According to an embodiment, the electronic device 101 may include multiple cameras arranged to perform image capturing in substantially the same direction. For example, the electronic device 101 may include multiple rear cameras arranged to capture images in a direction which a rear surface of the electronic device 101 faces. For example, the electronic device 101 may include multiple rear cameras arranged to capture images in a direction which a front surface of the electronic device 101 faces. The electronic device may also include multiple front cameras. In response to the first user input, the electronic device 101 may, in operation 321, acquire first image frames through a first camera among the multiple cameras. In operation 323, the electronic device 101 may, in operation 323, acquire second image frames through a second camera among the multiple cameras. FIG. 3 illustrates an operation of acquiring image frames through the first camera and the second camera, but the number of cameras is not limited thereto. For example, the electronic device 101 may further acquire third image frames through a third camera arranged to capture an image in a direction substantially identical to that of the first and second cameras. The operation (e.g., operation 321 and operation 323) of acquiring image frames through the multiple cameras may be performed in parallel.

According to an embodiment, in operation 330, the electronic device 101 may store the first video data. The first video data may include data generated while the electronic device 101 is capturing a video. For example, the electronic device 101 may store image frames acquired during video capturing in real time.

In an embodiment, the first video data may include multiple tracks. For example, the electronic device 101 may store the first video data including a first track and a second track. The first track may include at least some of the first image frames acquired through the first camera. The second track may include at least some of the second image frames acquired through the second camera. For example, the electronic device 101 may configure an image stream in which image frames unnecessary for post-processing are excluded from the first image frames and the second image frames, to be the first track and the second track.

In the disclosure, a track included in the first video data may refer to a set of pieces of data that may be listed according to a designated reference (e.g., a timestamp). For example, the first track may refer to at least a portion of first image frames included in an image stream output by the first camera.

In an embodiment, the first video data may further include another track. In an embodiment, the first video data may further include a user-captured image track. The user-captured image track may include image frames acquired through a selected camera among the multiple cameras according to a configuration selected by a user during video capturing. The user-captured image track may include image frames corresponding to a preview image displayed on the electronic device 101 during video capturing. For example, the electronic device 101 may select at least one camera from among the multiple cameras, based on a zoom ratio selected during video capturing, and include an image frame acquired through the selected at least one camera in a user-captured image track.

In an embodiment, the first video data may further include another track including at least one of image frames acquired through another camera. For example, the first video data may further include a third track including at least some of the third image frames acquired through the third camera among the multiple cameras.

According to an embodiment, in operation 340, the electronic device 101 may acquire second video data from the first video data stored in operation 330. The electronic device 101 may acquire the second video data by performing an image processing operation for at least one image frame included in the first video data. In the disclosure, the image processing operation performed to acquire the second video data from the first video data may be referred to as a post-processing operation. For example, the electronic device 101 may acquire the second video data by modifying the image frames included in the user-captured image track of the first video data by using at least one of the other tracks, or by replacing the image frames with other image frames.

In an embodiment, operation 340 may be performed after the first video data is stored in operation 330. The electronic device 101 may acquire the second video data by using the multiple tracks included in the first video data, thereby generating the second video data having an enhanced quality without performing a computing operation, which requires a large amount of computation, in a video capturing operation required to be performed in real time.

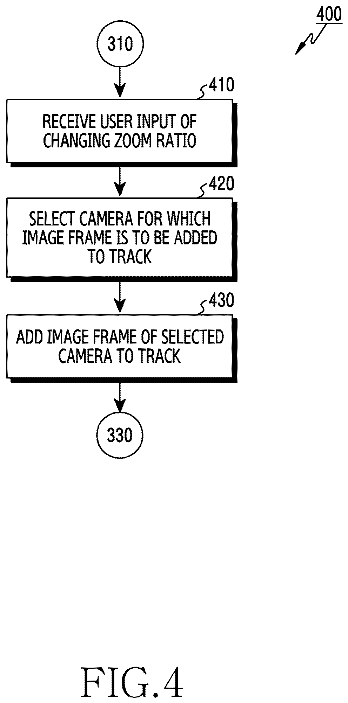

FIG. 4 is a flowchart 400 illustrating a process of storing first video data by the electronic device 101, based on a zoom ratio according to an embodiment.

According to an embodiment, in operation 410, the electronic device 101 may receive a user input of changing a zoom ratio. For example, the electronic device 101 may display a preview screen through the display module 160, and may receive a touch input corresponding to a pinch-out/pinch-in gesture on the preview screen. The pinch-out gesture may include an input in which the positions of two or more touch inputs move away from each other. The pinch-in gesture may include an input in which the positions of two or more touch inputs move closer to each other. Alternatively, for example, the electronic device 101 may display a visual object for selecting a zoom ratio via the display module 160, and may receive a touch input of selecting the visual object. However, the form of an input for changing a zoom ratio may be variously modified. In an embodiment, when there is no user input of changing a zoom ratio in a process of storing the first video data, operation 410 may be omitted.

According to an embodiment, in operation 420, the electronic device 101 may select a camera from which an image frame is to be stored, based on the zoom ratio. For example, when the selected zoom ratio is included in a first zoom ratio range, the electronic device 101 may select a camera (e.g., a wide camera) having a first focal length (or, a first field of view). For example, when the selected zoom ratio is included in a second zoom ratio range exceeding the first zoom ratio range, the electronic device 101 may select a camera (e.g., a tele-camera) having a second focal length (or a second field of view narrower than the first field of view) longer than the first focal length.

In an embodiment, the electronic device 101 may additionally select a camera. The electronic device 101 may additionally select a camera from which an image frame is to be stored, in addition to an image frame acquired through the selected camera. For example, in a state in which a zoom ratio is being changed by a user input during video capturing, the electronic device 101 may additionally select a camera having a focal length (or field of view) adjacent to the focal length (or field of view) of the camera selected based on the zoom ratio. For example, if a wide camera is the camera corresponding to the selected zoom ratio, the electronic device 101 may additionally select an ultra-wide camera and a tele-camera.

According to an embodiment, in operation 430, the electronic device 101 may add an image frame acquired through the selected camera to a track of the first video data. For example, the electronic device 101 may add an image frame acquired through the camera corresponding to the selected zoom ratio to a user-captured image track. The electronic device 101 may add an image frame acquired through the selected camera to a track corresponding to the camera.

FIG. 4 illustrates a process in which the electronic device 101 according to an embodiment selectively stores some image frames to efficiently store the first video data including multiple tracks. In an embodiment, the electronic device 101 may store, in multiple tracks, all image frames included in image streams output through the multiple cameras.

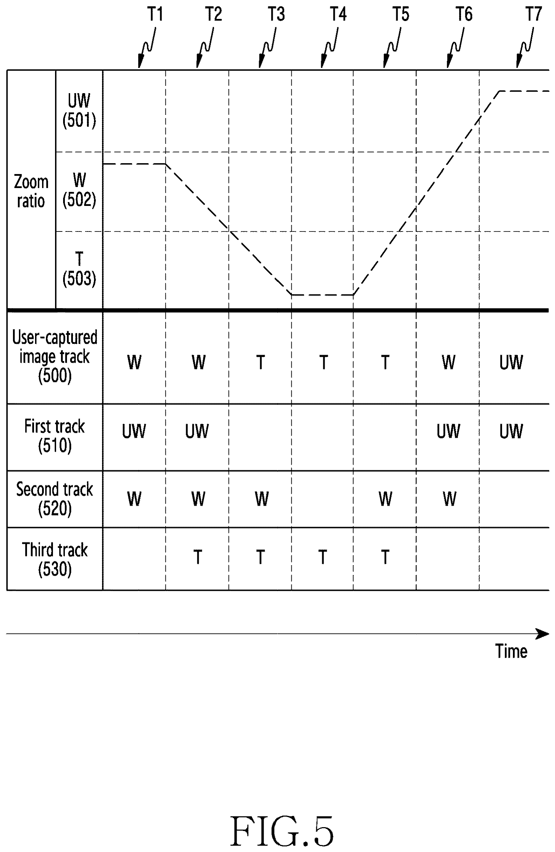

FIG. 5 is a diagram illustrating an example of an image frame included in first video data including multiple tracks 500, 510, 520, and 530, based on a zoom ratio according to an embodiment.

FIG. 5 illustrates an example of capturing a video by using a first camera, a second camera, and a third camera. In an embodiment, the electronic device may omit storage of some of image frames corresponding to the multiple tracks 500, 510, 520, and 530. The first camera may include a tele-camera. The second camera may include a wide camera. The third camera may include an ultra-wide camera. The wide camera may have a shorter focal length (a wider field of view) compared to the tele-camera. The ultra-wide camera may have a shorter focal length (a wider field of view) compared to the wide camera.

Referring to FIG. 5, in an embodiment, if a zoom ratio selected for video capturing within a first time period (T1) is included in a second zoom ratio range 502 corresponding to the second camera, the electronic device 101 may select the second camera. The electronic device 101 may store an image frame acquired through the second camera as image frames of the user-captured image track 500 and the second track 520 during the first time period (T1). The electronic device 101 may omit storage of image frames acquired through the first camera and the third camera within the first time period (T1). In the disclosure, the operation of omitting storage of an image frame may be understood as including at least one of an operation of skipping the operation of storing the image frame or an operation of storing and then deleting the image frame. The electronic device 101 may further store an image frame acquired through the first camera as an image frame of the first track 510 during the first time period (T1). Based on that a distance to a subject is determined to be shorter than the depth of field of the second camera in the first time period (T1), an image frame to be included in a second video may be changed to at least a part of an image frame acquired through the first camera.

In an embodiment, based on a change in a zoom ratio for video capturing within a second time period (T2), the electronic device 101 may additionally select the first camera and the third camera as cameras from which image frames are to be stored, in addition to the second camera. In a state in which the zoom ratio is being changed, the electronic device 101 may additionally select a camera having a focal length (or field of view) adjacent to that of a selected camera. In the disclosure, focal lengths (or fields of view) being adjacent may mean that the difference between the focal lengths (or the difference between the ranges of the fields of view) is smallest among the multiple cameras. A camera having a focal length (or field of view) adjacent to that of a camera may include at least one camera among one of cameras having a focal length longer than that of the camera or one of cameras having a shorter focal length. The zoom ratio for video capturing is included in the second zoom ratio range 502, and thus the electronic device 101 may store an image frame acquired through the second camera as an image frame of the user-captured image track 500 during the second time period (T2). The electronic device 101 may store image frames acquired through the first, second, and third cameras as image frames of the first track 510, the second track 520, and the third track 530, respectively. For example, the electronic device may store, in the first track 510, an image frame acquired from the first camera corresponding to a focal length shorter than a focal length detected in the second time period (T2) during video capturing. For example, the electronic device may store, in the third track 530, an image frame acquired from the third camera corresponding to a focal length longer than a focal length detected in the second time period (T2). In the case that an image frame corresponding to the second camera is stored in the user-captured image track 500 in a defocused state in the second time period (T2), the electronic device 101 may perform a post-processing operation of replacing the image frame included in the user-captured image track 500 in the second time period (T2) with an image acquired from an image frame stored in the first track 510 or the third track 530.

In an embodiment, based on that a zoom ratio for video capturing within a third time period (T3) is included in a third zoom ratio range 503 corresponding to the first camera, the electronic device 101 may select the first camera. The electronic device 101 may store an image frame acquired through the first camera as image frames of the user-captured image track 500 and the third track 530 during the third time period (T1). Based on that the zoom ratio is included in the third zoom ratio range 503 and the zoom ratio is being changed by a user input, the electronic device 101 may additionally select the second camera corresponding to the second zoom ratio range 502 adjacent to the third zoom ratio range 503. The electronic device 202 may store an image frame acquired through the second camera as an image frame of the second track 520 during the third time period (T3). The electronic device 101 may omit storage of an image frame acquired through the third camera.

In an embodiment, based on that a zoom ratio for video capturing within a fourth time period (T4) is included in the third zoom ratio range 503 corresponding to the first camera, the electronic device 101 may select the first camera. The electronic device 101 may store an image frame acquired through the first camera as image frames of the user-captured image track 500 and the third track 530 during the fourth time period (T4). The electronic device 101 may omit storage of image frames acquired through the second camera and the third camera, based on the zoom ratio not being changed within the fourth time period (T4). For example, the zoom ratio configured for capturing an image during the fourth time period (T4) may correspond to a highest zoom ratio supported by the electronic device 101 or a range adjacent to the highest zoom ratio. In a state in which a high zoom ratio is configured (e.g., 10x or more), the second camera may be required to provide an increased level of digital zoom to acquire an image corresponding to the zoom ratio, thereby causing image quality degradation. Therefore, the electronic device 101 may store only an image frame acquired through the third camera during the fourth time period T4 in the user-captured image track 500 and the third track 530.

In an embodiment, based on that a zoom ratio for video capturing within a fifth time period (T5) is included in the third zoom ratio range 503 corresponding to the first camera, the electronic device 101 may select the first camera. The electronic device 101 may store an image frame acquired through the first camera as image frames of the user-captured image track 500 and the third track 530 during the fifth time period (T5). The electronic device 101 may store an image frame acquired through the second camera corresponding to the second zoom ratio section 502 as an image frame of the second track 520 during the fifth time period (T5). For example, based on that the zoom ratio is being changed within the fifth time period (T5), the electronic device 101 may further include the second camera having a focal length (or field of view) adjacent to the focal length (or field of view) of the first camera. The electronic device 101 may store an image frame acquired through the second camera as an image frame during the fifth time period (T5). The electronic device 101 may omit storage of an image frame of the first track 510 during the fifth time period (T5).

In an embodiment, based on that a zoom ratio for video capturing within a sixth time period (T6) is included in the second section 502, the electronic device 101 may select the second camera. The electronic device 101 may store an image frame acquired through the second camera as image frames of the user-captured image track 500 and the second track 520 during the sixth time period (T6). The electronic device 101 may select a camera from which an image frame is to be stored, based on whether a zoom ratio is increasing or decreasing. Based on that the zoom ratio is being changed toward the first zoom ratio section 501, the electronic device 101 may store an image frame acquired through the third camera corresponding to the first zoom ratio section 501 as an image frame of the first track 510 during the sixth time period (T6). The electronic device 101 may omit storage of an image frame of the third track 530 during the sixth time period (T6) corresponding to the first camera.

In an embodiment, based on that a zoom ratio for video capturing within a seventh time period (T7) is included in the first zoom ratio range 501 corresponding to the third camera, the electronic device 101 may select the third camera. The electronic device 101 may store an image frame acquired through the third camera as image frames of the user-captured image track 500 and the first track 510 during the seventh time period (T7). The electronic device 101 may omit storage of image frames acquired through the first camera and the second camera, based on the zoom ratio not being changed within the seventh time period (T7).

In an embodiment, the image frames stored in the user-captured image track 500 may include at least some of the image frames stored in the first track 510, the second track 520, or the third track 530. For example, the image frames stored in the user-captured image track 500 may include an image acquired by cropping at least a part of an image frame stored in the first track 510, the second track 520, or the third track 530.

However, FIG. 5 illustrates an example of a method in which the electronic device 101 stores some image frames, and the image frames included in the first video data may be selected in a different manner. The electronic device 101 may reduce storage space required to store the first video data by omitting storage of unnecessary image frames.

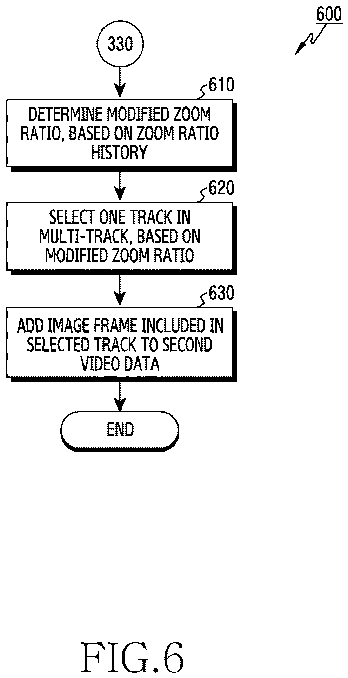

FIG. 6 is a flowchart 600 illustrating a process of acquiring second video data from stored first video data by the electronic device 101 according to an embodiment.

In an embodiment, the electronic device 101 may acquire second video data from the first video data stored in operation 330. The electronic device 101 according to an embodiment may acquire the second video data, based on a zoom ratio history including a history of a zoom ratio configured according to a user input or an operation of the camera application during video capturing for storing the first video data.

According to an embodiment, in operation 610, the electronic device 101 may determine a modified zoom ratio, based on a zoom ratio history. When the zoom ratio is changed during video capturing, a change in the zoom ratio to a target zoom ratio may not be smoothly performed. For example, the zoom ratio may be changed too rapidly, and the zoom ratio may be increased and decreased repeatedly. Such a non-smooth change in the zoom ratio may degrade the quality of a captured image. The electronic device 101 may determine a modified zoom ratio for a smooth change in the zoom ratio, based on the zoom ratio history.

According to an embodiment, in operation 620, the electronic device 101 may determine one of multiple tracks (in the multi-track) included in the first video data, based on the modified zoom ratio. For example, the electronic device 101 may determine a track corresponding to a zoom ratio section to which the modified zoom ratio belongs, based on the zoom ratio section.

According to an embodiment, in operation 630, the electronic device 101 may add an image frame included in the selected track to the second video data. For example, when a camera used for image capturing and a camera corresponding to the selected track are different, the electronic device 101 may replace an image frame included in a user-captured image track with an image frame included in the selected track. The electronic device 101 may acquire the second video data by replacing at least a part of the user-captured image track with an image frame included in a different track.

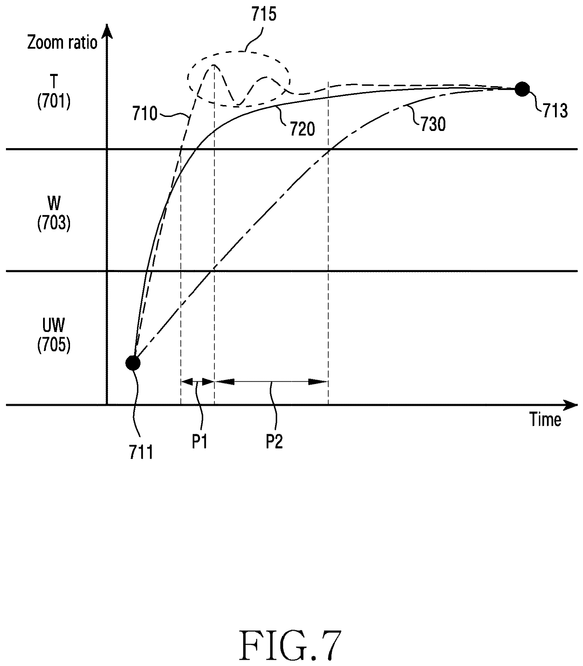

FIG. 7 illustrates an example of a modified zoom ratio determined by the electronic device 101 to apply same to second video data according to an embodiment.

In an embodiment, the electronic device 101 may determine a zoom ratio change path including a modified zoom ratio from a zoom ratio history 710 including a history of a zoom ratio configured during video capturing.

In an embodiment, the electronic device 101 may determine a modified zoom ratio, based on a peak value included in the zoom ratio history 710. For example, referring to FIG. 7, if a section 715 in which peak values are repeated a predetermined number of times or more within a certain range exists in the zoom ratio history 710, the electronic device 101 may include a first zoom ratio change path 720 including a modified zoom ratio for smoothing the section 715 in which the peak values exist.

In an embodiment, the electronic device 101 may determine a modified zoom ratio, based on a starting zoom ratio 711 and a final zoom ratio 713 of the section in which the zoom ratio is changed in the zoom ratio history 710. The final zoom ratio 713 may be determined based on a crop region of a target region of interest (RoI). For example, if the coordinates of a crop region for a zoom ratio of x1 is (0, 0, 4000, 3000), the size of the crop region is 4000×3000. If the crop region of the target region of interest corresponds to (1000, 0, 3000, 1500), the size of the crop region is 2000×1500. Therefore, the difference between the size of the crop region determined based on the coordinates of the crop region and the size of the target region of interest is 2 times, and thus the final zoom ratio 713 may be x2. The electronic device 101 may determine a second zoom ratio change path 730, based on an algorithm for determining a path enabling the starting zoom ratio 711 to reach the final zoom ratio 713, based on a change rate within a designated value.

In an embodiment, the electronic device 101 may determine a modified zoom ratio, based on an artificial intelligence learning model. For example, the electronic device 101 may input the zoom ratio history 710 to an artificial intelligence training model having been trained with a zoom pattern by using a neural network model. The electronic device 101 may determine a zoom ratio change path from an output of the artificial intelligence training model.

In an embodiment, the electronic device 101 may determine an image frame to be included in the second video data, based on the modified zoom ratio. For example, referring to FIG. 7, a user-captured image track of a first video frame generated based on the zoom ratio history 710 may include an image frame captured through a first camera 701 during a first section (P1). In case that the path according to the modified zoom ratio is the second zoom ratio change path 730, a camera corresponding to the first section (P1) may be a third camera 705. The electronic device 101 may include, in the first section (P1) of the second video data, a result of performing image processing (e.g., image cropping) for an image frame acquired through the third camera 705 during the first section P1, based on the zoom ratio included in the second zoom ratio change path 703. The image frame acquired through the third camera 705 may be acquired from any one (e.g., the third track 530 in FIG. 5) of multiple tracks included in the first video data. Referring to a second section (P2) of FIG. 7, the user-captured image track of the first video frame may include an image frame captured through the first camera 701 during the second section (P2). Referring to the second zoom ratio change path 730, a camera corresponding to the second section (P2) may be a second camera 703. The electronic device 101 may include, in the second section (P2) of the second video data, a result acquired by performing image processing for an image frame acquired through the second camera 703 during the second section (P2), based on the second zoom ratio change path 730. The image frame acquired through the second camera 703 may be acquired from any one (e.g., the second track 520 in FIG. 5) of multiple tracks included in the first video data.

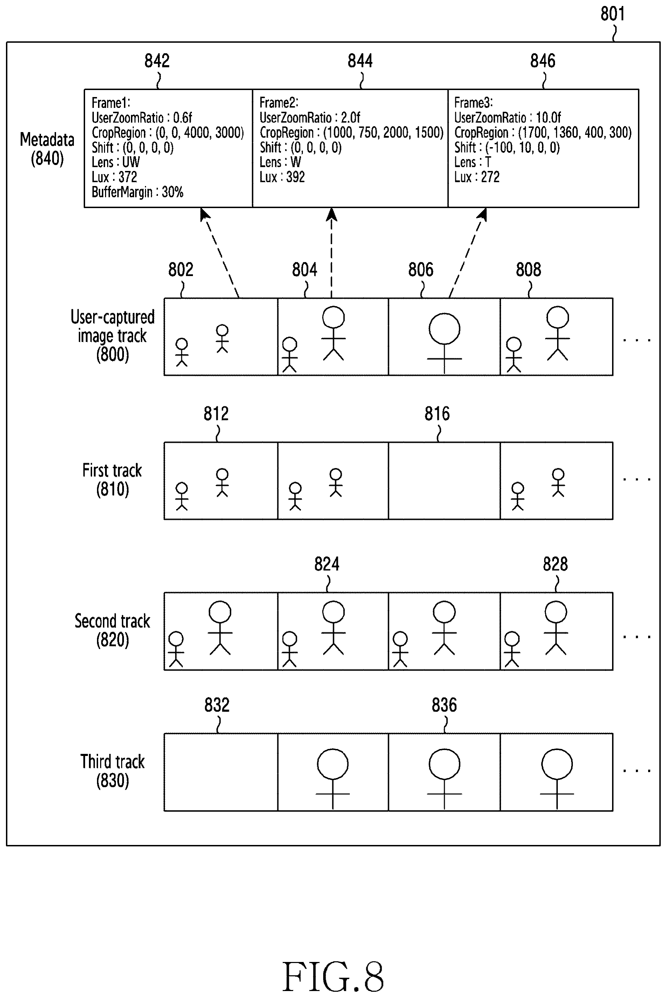

FIG. 8 illustrates an example of a configuration of first video data 801 stored by the electronic device 101 according to an embodiment.

In an embodiment, the electronic device 101 may store the first video data 801 including multiple tracks 800, 810, 820, 830 and metadata 840 for a captured image. The metadata 840 may be stored as a separate track from the multiple tracks 800, 810, 820, and 830 including image frames.

In an embodiment, the user-captured image track 800 included in the first video data 801 may include image frames 802, 804, 806, and 808 corresponding to a configuration value selected during video capturing. The user-captured image track 800 may be acquired by performing image processing (e.g., an operation of cropping an image, based on a zoom ratio) for image frames included in the other tracks 810, 820, and 830. For example, referring to FIG. 8, the first image frame 802 may correspond to a first track image frame 812 of the first track 810. The second image frame 804 may correspond to a second track image frame 824 of the second track 820. The third image frame 806 may correspond to a third track image frame 836 of the third track 830. The fourth image frame 808 may correspond to a fourth track image frame 828 of the second track 820. The tracks 810, 820, and 830, except for the user-captured image track 800, may omit storage of image frames for at least some sections. For example, a fifth track image frame 816 and a sixth track image frame 832, which are image frames captured through a camera having a characteristic significantly different from that of a camera used to capture an image frame included in the user-captured image track 800, may not be included in the first video data 801.

The metadata 840 may include information on image frames included in the user-captured image track 800. Referring to FIG. 8, the metadata 840 may include at least one of first metadata 842 for the first image frame 802, second metadata 844 for the second image frame 804, or third metadata 846 for the third image frame 806. The metadata 840 may include, for example, at least one of frame identification information of an image frame, zoom ratio information configured during capturing of an image frame, crop region information on an image frame, shake correction information for image stabilization, camera identification information for identifying a used camera, illuminance information, or margin region information.

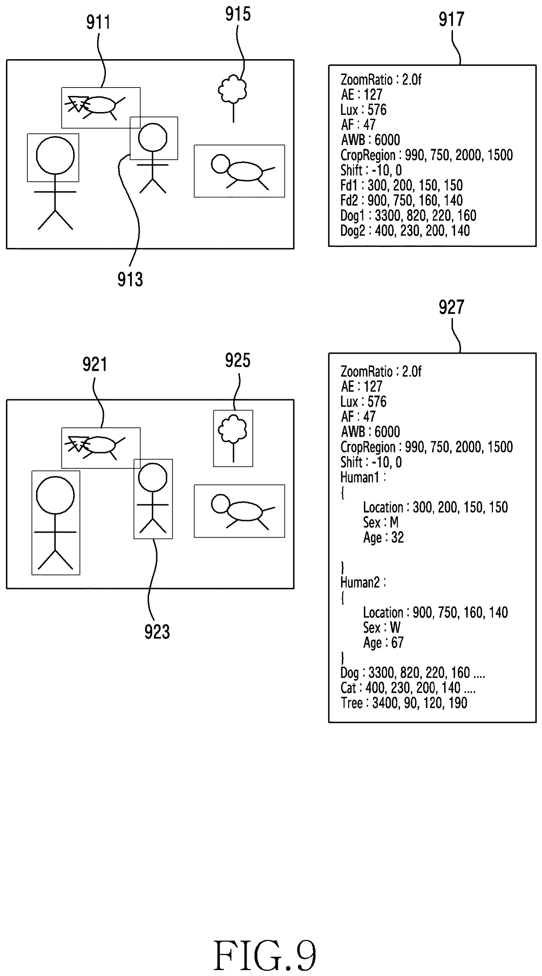

FIG. 9 illustrates an example of metadata 917 stored in first video data by the electronic device 101 and updated metadata 927 according to an embodiment.

In an embodiment, during video capturing, the electronic device 101 may perform image recognition on a captured image frame to acquire metadata 917. However, since an image frame needs to be stored substantially in real-time during video capturing, it is be difficult to perform precise image recognition that takes a long time. Therefore, the electronic device 101 may perform image recognition during video capturing, based on an image recognition algorithm having relatively low precision and high speed.

For example, referring to FIG. 9, the metadata 917 included in the first video data may include a result of misrecognizing a region 911 in which a cat is captured as a subject as a region in which a dog is captured. For example, the metadata 917 may include a result of recognizing only a region 913 in which the face is captured in a region in which a person is captured as a subject. For example, the electronic device 101 may fail to recognize a region in which a tree 915 is captured as a subject, and thus information on the region in which the tree 915 is captured may not exist in the metadata 917.

In an embodiment, the electronic device 101 may update metadata stored in first video data in a process of acquiring second video data from the stored first video data. Therefore, the electronic device 101 may perform image recognition after storage of the first video data, based on an image recognition algorithm having relatively high precision. For example, the updated metadata 927 may include information acquired by modifying the region 911 having been misrecognized as a region in which a dog is captured, into a region 921 in which a cat is recognized. For example, the updated metadata 927 may include information acquired by modifying information on the region 913 in which only a person's face has been recognized, into an entire region 923 in which the person is captured as a subject. For example, the updated metadata 927 may include information on a region 925 in which the tree is captured as a subject, which is not included in the metadata 917.

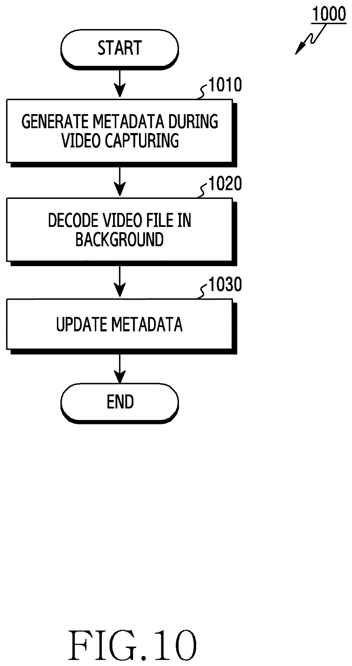

FIG. 10 is a flowchart 1000 illustrating a process of storing metadata in second video data by the electronic device 101 according to an embodiment.

According to an embodiment, in operation 1010, the electronic device 101 may generate metadata (e.g., the metadata 840 of FIG. 8 or the metadata 917 of FIG. 9) for a video being captured. The electronic device 101 may generate metadata for at least some of image frames acquired through multiple cameras during video capturing. For example, while performing operation 321 and operation 323 of FIG. 3, the electronic device 101 may generate metadata for at least one of a first image frame or a second image frame.

According to an embodiment, in operation 1020, the electronic device 101 may decode a stored video file (e.g., first video data), based on a process running in the background. In an embodiment, the electronic device 101 may acquire information on the video file from the decoded video file. For example, the electronic device 101 may acquire information related to a subject included in an image frame included in the video file.

According to an embodiment, in operation 1030, the electronic device 101 may update the metadata, based on acquired metadata. For example, when information different from the metadata 840 of FIG. 8 is acquired, the electronic device 101 may modify the information included in the metadata 840 by using the acquired information or add the acquired information thereto. The electronic device 101 may acquire second video data, based on the updated metadata.

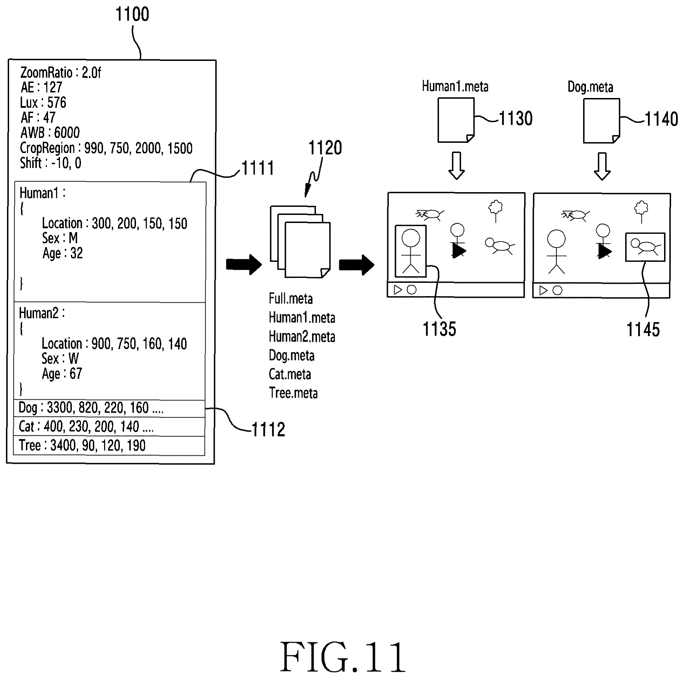

FIG. 11 conceptually illustrates a method of acquiring second video data by the electronic device 101, based on selected metadata according to an embodiment.

In an embodiment, metadata 1100 may include information on at least one object recognized in an image frame. The electronic device 101 may select at least a part of the information included in the metadata 1100. For example, the electronic device 101 may display, through a display (e.g., the display module 160 of FIG. 1), a user interface for displaying the information included in the metadata 1100. The electronic device 101 may receive a user input of selecting a part of the information displayed on the display. For example, the electronic device 101 may store at least one metadata file 1120 in which the information included in the metadata is classified and stored. The electronic device 101 may select a part of the information included in the metadata 1100, based on a file selected by a user among the at least one metadata file 1120.

For example, the metadata 1110 illustrated in FIG. 11 may include first information 1111 on a region determined to include a captured image of a person, in an image frame included in first video data. The metadata 1110 may include second information 1112 on a region determined to include a captured image of a dog, in an image frame included in the first video data. The electronic device 101 may generate the at least one metadata file 1120 including a first metadata file 1130 including the first information 1111 and a second metadata file 1140 including the second information 1112. When the user selects the first metadata file 1130 and performs an operation (e.g., operation 340 of FIG. 3) of acquiring second video data, the electronic device 101 may acquire the second video data by tracking a corresponding object so that a region 1135 in which a person is displayed is displayed in an image. When the user selects the second metadata file 1140 and performs an operation (e.g., operation 340 of FIG. 3) of acquiring second video data, the electronic device 101 may acquire the second video data by tracking a corresponding object so that a region 1145 in which a dog is displayed is displayed in an image.

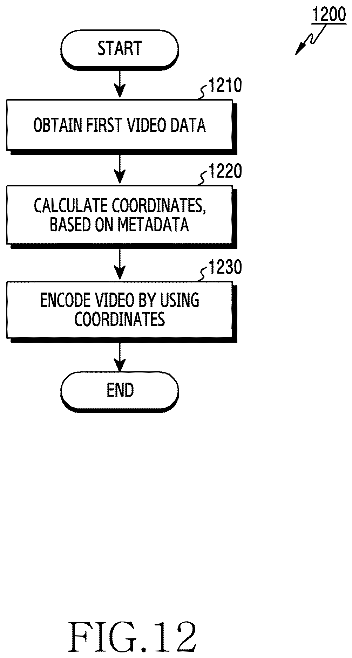

FIG. 12 is a flowchart 1200 illustrating a process of acquiring second video data by the electronic device 101, based on metadata according to an embodiment.

The electronic device 101 according to an embodiment may acquire first video data in operation 1210. In operation 1210, the electronic device 101 may acquire metadata for the first video data. For example, the electronic device 101 may acquire metadata for the first video data through operation 1030 of FIG. 10, in which metadata is updated, or through an operation in which a user selects metadata.

The electronic device 101 according to an embodiment may calculate coordinates, based on the metadata in operation 1220. The coordinates may include information for identifying a region in an image frame. For example, the electronic device 101 may acquire coordinates of a region to be cropped from an image at a time point of switching a camera used to acquire an image frame due to a change in the zoom ratio within a user-captured image track (e.g., the user-captured image track 800 in FIG. 8). The time point of switching the camera may refer to a time point at which a camera used to acquire a preceding image frame within the user-captured image track (or image stream) is different from a camera used to acquire a subsequent image frame. For example, the electronic device 101 may calculate coordinates for tracking a region in which an object identified in an image frame is captured, based on metadata indicating the object.

According to an embodiment, in operation 1230, the electronic device 101 may acquire second video data by encoding a video, based on the acquired coordinates. For example, the electronic device 101 may crop a partial region of an image frame, based on the coordinates acquired for a time point at which the camera is switched, and may encode the video to include the cropped region.

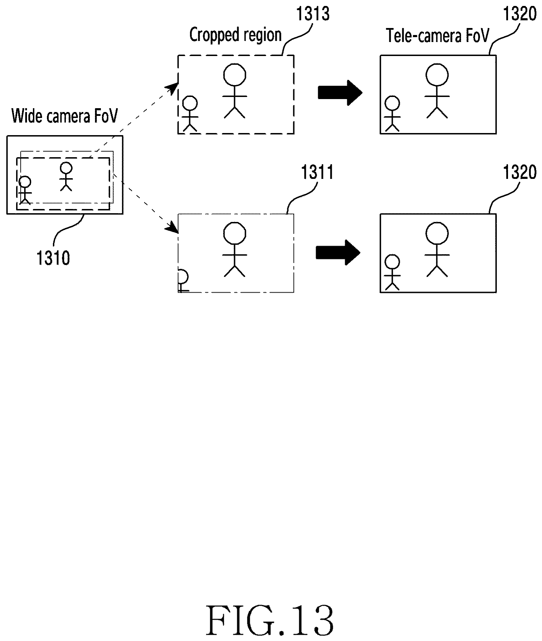

FIG. 13 illustrates an example of determining, by the electronic device 101, a region to be cropped from an image frame, based on a time point at which a camera is switched according to an embodiment.

In an embodiment, the electronic device 101 may acquire an image frame 1310, based on a field of view of a first camera (e.g., a wide-angle camera). The electronic device 101 may generate a video by cropping at least partial region of the image frame 1310, based on a zoom ratio configured for capturing an image. When a partial region is cropped inside the image frame 1310 without considering switching of the camera, the electronic device 101 may determine a region 1311 to be cropped, based on the center of the image frame 1310. In this case, a difference between the cropped region 1311 and an image frame 1320 acquired through a second camera (e.g., a telephoto camera) switched from the first camera may be significantly large.

In an embodiment, during video capturing, the succeeding image frame 1320 has not been acquired at a time point at which an operation of cropping a partial region of the preceding image frame 1310 is performed. Therefore, it is not possible to compare the cropped region with the succeeding image frame 1320. However, after storing first video data, the electronic device 101 may determine a region 1313 matching the succeeding image frame 1320 from the preceding image frame 1310.

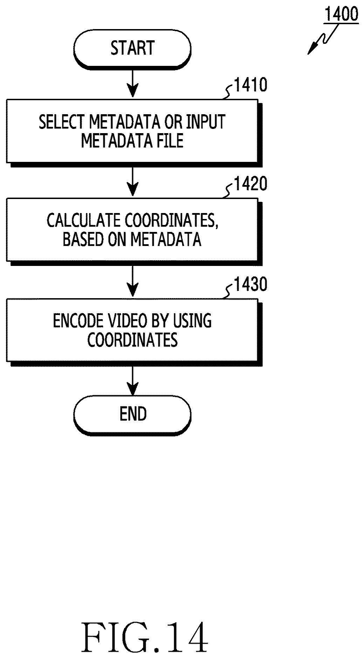

FIG. 14 is a flowchart 1400 illustrating a process of generating a video by the electronic device 101, based on metadata according to an embodiment.

According to an embodiment, in operation 1410, the electronic device 101 may perform a user input of selecting metadata or receive a metadata file through a user interface.

According to an embodiment, in operation 1420, the electronic device 101 may determine coordinates in an image frame, based on the metadata. For example, the electronic device 101 may determine coordinates indicating a region in which an object indicated by the selected metadata is captured.

According to an embodiment, in operation 1430, the electronic device 101 may acquire second video data by encoding a video by using the determined coordinates. For example, the electronic device 101 may encode the video to include a cropped image including the region in which the object indicated by the selected metadata is captured.

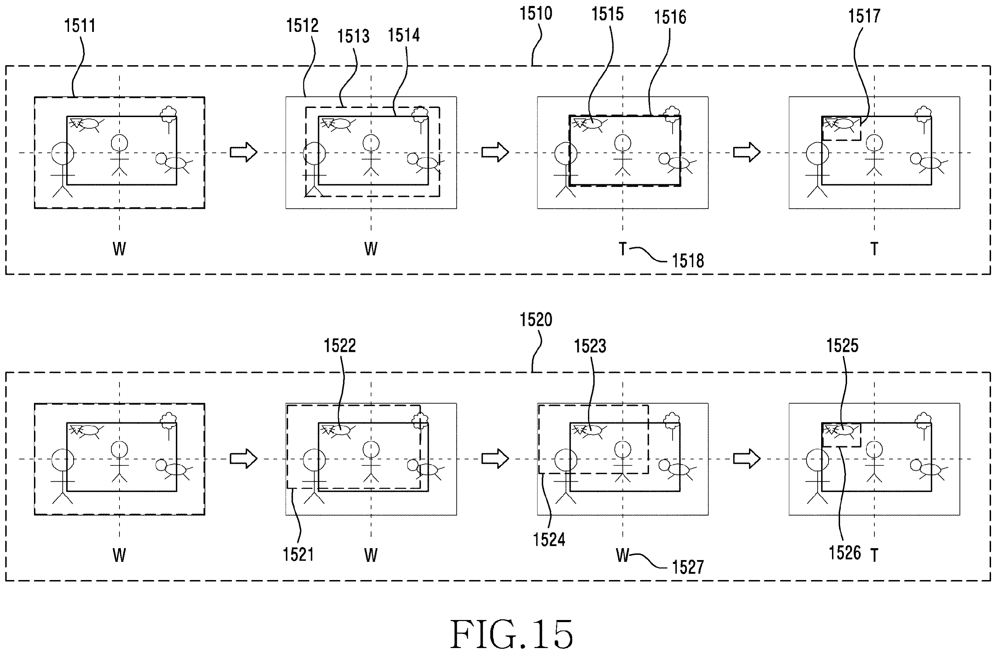

FIG. 15 is a diagram illustrating an example of determining, by the electronic device 101, an image stored in second video data, based on metadata according to an embodiment.

In an embodiment, when metadata indicating a captured object in an image is selected, the electronic device 101 may configure second video data to prevent the object from moving out of the video. Referring to a first zoom scenario 1510 of FIG. 15, in a state in which a region included in the second video data is the entirety of an image frame 1511 acquired through a wide camera, the electronic device may crop a region 1513 between a field of view 1512 of the wide camera and a field of view 1514 of a tele-camera according to a user input of increasing the zoom ratio. The electronic device 101 may scale-up the cropped region and include a scaled-up image in the second video data.

In an embodiment, when the zoom ratio is further increased, the size of a region to be included in the second video data may be included in a field of view 1516 of the tele-camera. Based on a zoom ratio causing the size of the region to be included in the second video data to be included within the field of view 1516 of the tele-camera, the electronic device 101 may convert an image to be included in the second video data into an image frame acquired through the tele-camera (1518). In this case, if the zoom ratio is further increased, an object 1515 designated by metadata may move out of the region constituting the image of the second video data. The electronic device 101 may determine a region 1516 to be cropped from an image frame acquired through the telephoto camera so as to prevent the object 1515 from moving out of the region constituting the image of the second video data.

In an embodiment, when metadata indicating a captured object in an image is selected, the electronic device 101 may move a region to be cropped from the image, based on a position on which the designated object is captured, according to an increase in the zoom ratio. Referring to a second zoom scenario 1520 of FIG. 15, the electronic device 101 may determine a region 1521 to be cropped such that a position on which an object 1522 is displayed in the image is maintained according to an increase in the zoom ratio. When the zoom ratio is increased, the size of a region 1524 to be cropped may be determined to be included in the field of view 1516 of the tele-camera. The region 1521 to be cropped includes a region deviating from the field of view of the tele-camera, and thus, in the first zoom scenario 1510, camera switching occurs. However, in the second zoom scenario 1520, configuration of the second video data based on an image frame acquired through the wide camera may be maintained even at the same zoom ratio. If the zoom ratio is further increased and a region for capturing a subject 1525 is placed within the range of the field of view of the tele-camera, the electronic device 101 may switch the camera so as to configure the second video data, based on an image frame acquired through the tele-camera.

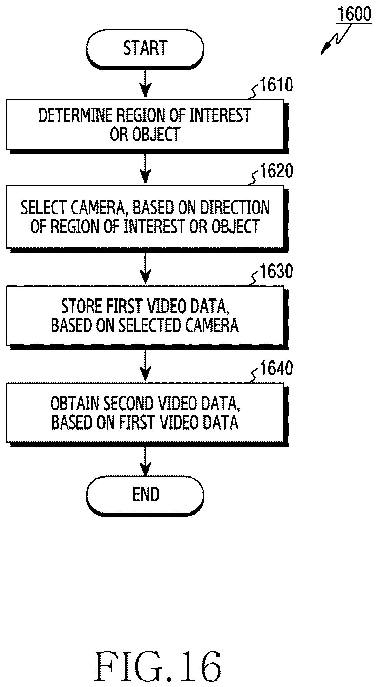

FIG. 16 is a flowchart 1600 illustrating a process of acquiring second video data by the electronic device 101, based on a region of interest or an object according to an embodiment.

According to an embodiment, in operation 1610, the electronic device 101 may determine a region of interest of a frame or an object captured in an image frame, based on an image acquired through at least one camera. For example, the electronic device 101 may determine an image in which a subject is captured among the images acquired through the at least one camera.

According to an embodiment, in operation 1620, the electronic device 101 may select a camera, based on a direction of the region of interest or the object. For example, the electronic device 101 may determine a camera displaced to perform image capturing in a direction of a user's gaze detected by using a gaze detection sensor of the electronic device 101. The electronic device 101 may, based on movement of a subject captured in the region of interest or a subject corresponding to the object, or a change in a direction which the electronic device 101 faces, track the direction of the region of interest or the object. The electronic device 101 may select a camera corresponding to a changed direction of the region of interest or object, among multiple cameras arranged to face different directions.

According to an embodiment, in operation 1630, the electronic device 101 may store first video data, based on the selected camera. For example, the electronic device 101 may store an image frame acquired through the selected camera as a user-captured image track. The electronic device 101 may selectively store an image frame acquired through the selected camera and an image frame acquired through a camera placed around the selected camera as a track corresponding to each camera. Operation 1630 may be repeatedly performed together with operation 1620 during video capturing.

According to an embodiment, in operation 1640, the electronic device 101 may acquire second video data, based on the stored first video data. For example, in operation 1640, operation 340 in FIG. 3 may be performed.

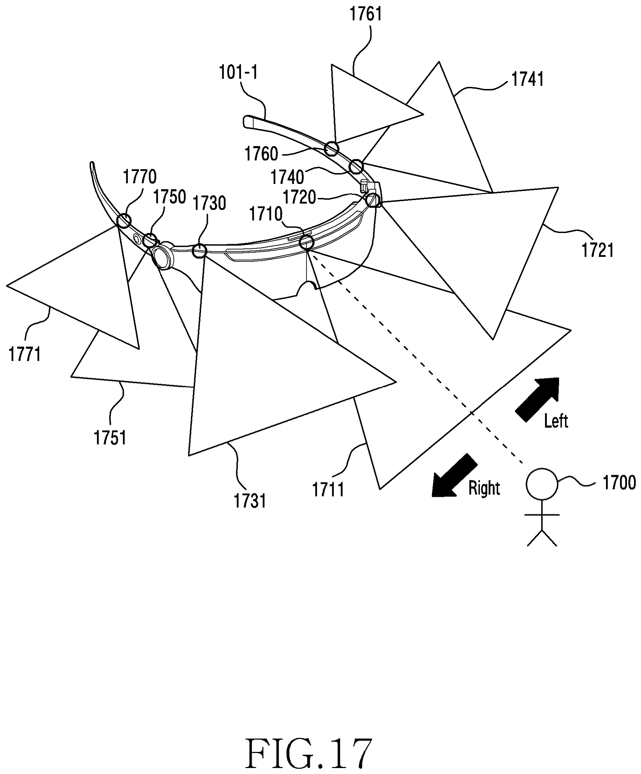

FIG. 17 illustrates an example of a configuration of the electronic device 101 including a wearable device 101-1 according to an embodiment.

In an embodiment, referring to FIG. 17, the wearable device 101-1 may include a head-mounted device (HMD) in the form of being worn on a person's head. However, the form of the wearable device 101-1 is not limited thereto. If the electronic device 101 includes the wearable device 101-1, the electronic device 101 may include multiple cameras 1710, 1720, 1730, 1740, 1750, 1760, and 1770 arranged to capture a user's surroundings while being worn on the user's body.

In an embodiment, the multiple cameras 1710, 1720, 1730, 1740, 1750, 1760, and 1770 may have different fields of view. Referring to FIG. 17, the first camera 1710 may have a first field of view 1711. The second camera 1720 may have a second field of view 1721. The third camera 1730 may have a third field of view 1731. The fourth camera 1740 may have a fourth field of view 1741. The fifth camera 1750 may have a fifth field of view 1751. The sixth camera 1760 may have a sixth field of view 1761. The seventh camera 1770 may have a seventh field of view 1771. However, the number of the multiple cameras and the fields of view illustrated in FIG. 17 are for the purpose of describing an example, and the disclosure is not necessarily limited to the example illustrated in FIG. 17.

In an embodiment, the electronic device 101 may, based on a region of interest in which a subject 1700 is captured or a region of interest corresponding to the subject 1700 in an image, select a camera from which an image frame is to be stored in first video data.

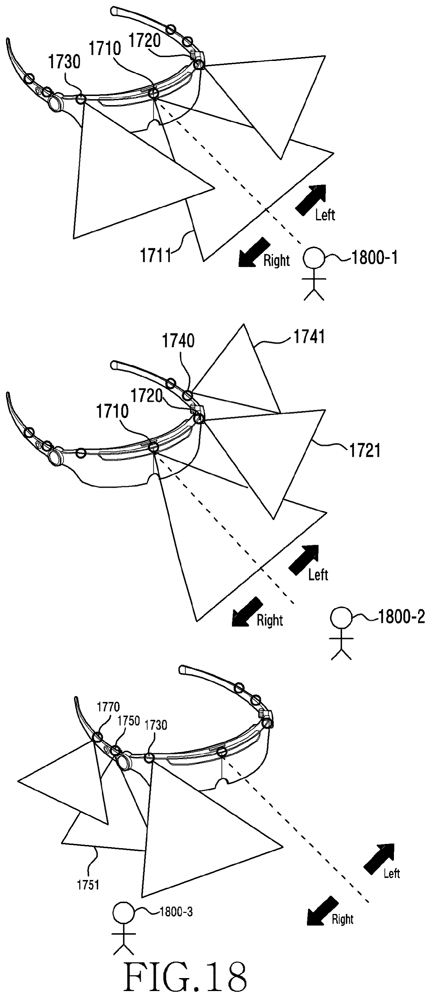

FIG. 18 illustrates an example related to a method of storing first video data by the electronic device 101 including the wearable device 101-1 according to an embodiment.

In an embodiment, the electronic device 101 may select the first camera 1710 including the first field of view 1711 in which a subject 1800-1 is captured. For example, the electronic device 101 may detect a user's gaze direction by using a gaze detection sensor. The electronic device 101 may select the first camera 1710 corresponding to the subject 1800-1 located in the user's gaze direction. The electronic device 101 may store an image frame acquired through the first camera 1710 in a user-captured image track and a first track of first video data. The electronic device 101 may store, in the first video data, image frames acquired through the second camera 1720 and the third camera 1730 having a field of view adjacent to the first field of view 1711. The electronic device 101 may omit storage of image frames acquired through the remaining cameras except for the first camera 1710, the second camera 1720, and the third camera 1730.

In an embodiment, the electronic device 101 may generate second video data by using an image frame acquired via the second camera 1720 or the third camera 1730 according to movement of the subject 1800-1 or the electronic device 101. For example, when a subject 1800-2 has moved to a location corresponding to the second field of view 1721 with respect to the electronic device 101, the electronic device 101 may acquire second video data by using an image frame acquired through the second camera 1720. According to the movement of the subject 1800-2 to a location corresponding to the second field of view 1721, the electronic device 101 may store an image frame acquired through the fourth camera 1740 having the fourth field of view 1741 corresponding to the second field of view 1721, in the user-captured image track and a fourth track of the first video data. The electronic device 101 may omit storage of image frames acquired through the remaining cameras except for the first camera 1710, the second camera 1720, and the fourth camera 1740.

In an embodiment, based on a subject 1800-3 having moved to a location included in the fifth field of view 1751 of the fifth camera 1750, the electronic device 101 may store an image frame acquired through the fifth camera 1750 in the user-captured image track and a fifth track of the first video data. The electronic device 101 may omit storage of image frames acquired through the remaining cameras except for the third camera 1730, the fifth camera 1750, and the seventh camera 1770.

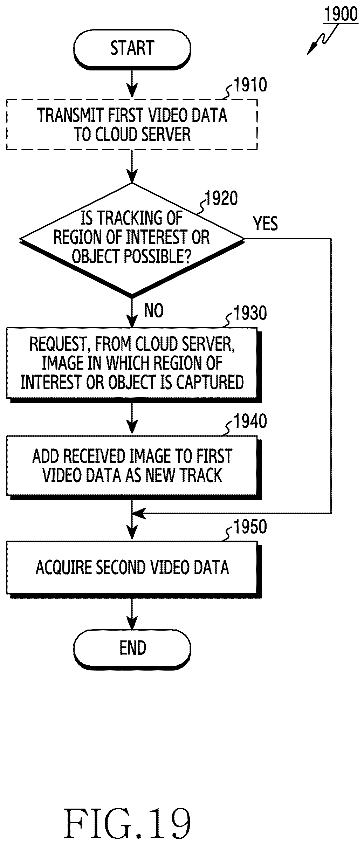

FIG. 19 is a flowchart 1900 illustrating a process of acquiring second image data by the electronic device 101, based on an image received from an external device (e.g., the electronic device 102, the electronic device 104, or the server 108 in FIG. 1) according to an embodiment.

According to an embodiment, in operation 1910, the electronic device 101 may transmit first image data including multiple tracks to a cloud server. The first image data to be transmitted to the cloud server may include metadata related to a captured image. The cloud server may include a device capable of providing a service related to video capturing to the electronic device 101. Operation 1910 may be omitted or replaced with another operation. For example, in operation 1910, the electronic device 101 may separately transmit the metadata included in the first image data to the cloud server.

According to an embodiment, in operation 1920, the electronic device 101 may determine whether configuring of, based on the first video data, second video data without an image frame in which a region of interest or an object is not detected is possible. For example, during video capturing, if a subject corresponding to a region of interest or an object moves out of the range of the fields of view of multiple cameras included in the electronic device 101, the region of interest or the object may not be detected in the image frames included in the multiple tracks at a corresponding time point. In this case, since the second video data includes an image frame in which the region of interest or the object is not detected, the electronic device 101 may determine that tracking of the region of interest or the object is impossible. For example, in operation 1920, if tracking of the region of interest or the object at all time points is possible, the electronic device 101 may perform operation 1950 of acquiring second video data, based on the multiple tracks included in the first video data.

According to an embodiment, when it is determined, based on the first video data, that there is a section in which tracking of the region of interest or object is impossible, the electronic device 101 may, in operation 1930, request, from the cloud server, an image in which the region of interest or object related to the first video data is captured. In operation 1930, the electronic device 101 may transmit information enabling identification of the region of interest or object related to the first video data. For example, the electronic device 101 may transmit, to the cloud server, at least some of metadata associated with the region of interest or the object detected in the first video data. The at least some of the metadata associated with the region of interest or the object may include, for example, at least one of location information (e.g., a GPS coordinate value) on a location at which an image is captured, time information on an image capturing time, or RoI information indicating a characteristic of the region of interest or object identified from the first video data. The cloud server having received the request may search for an image in which the region of interest or object related to the first video data is captured, based on the metadata received from the electronic device 101. For example, the cloud server may search for an image in which the region of interest or object is captured at a time point requested by the electronic device 101 among images stored in the cloud server. For example, the cloud server may request other external devices to transmit an image in which the region of interest or object is captured at the corresponding time point. The cloud server may transmit third video data including the discovered image to the electronic device 101.

According to an embodiment, in operation 1940, the electronic device 101 may add an image included in the third video data received from the cloud server to the first video data as a new track. Based on the first video data including the image included in the third video data and added thereto, the electronic device 101 may perform operation 1950 of acquiring second video data from the multiple tracks of the first video data.

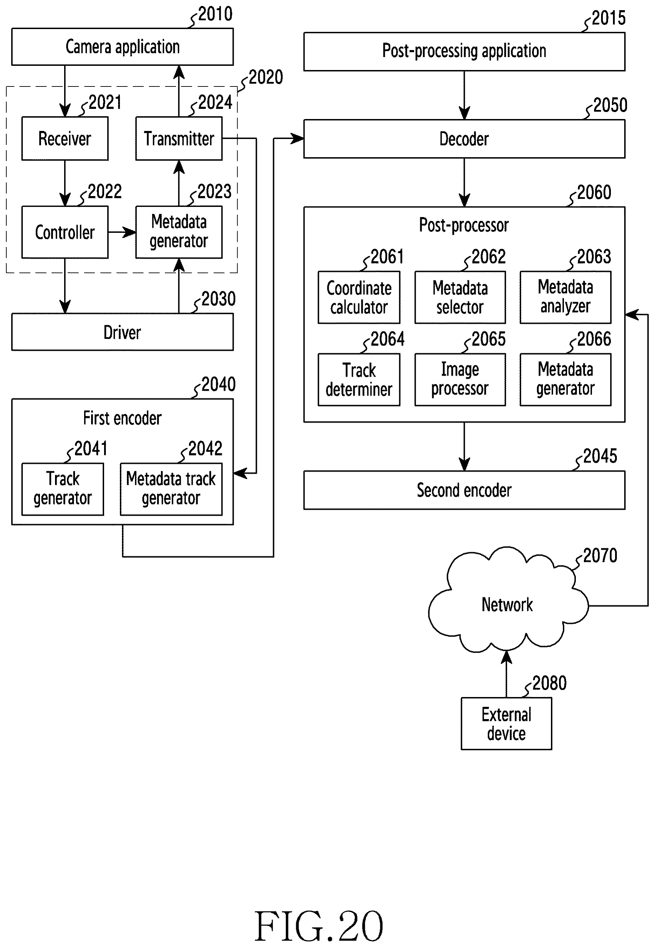

FIG. 20 illustrates elements for configuring the electronic device 101 according to an embodiment. FIG. 20 illustrates an example for configuring the electronic device 101 according to an embodiment, and the configuration of the electronic device 101 is not limited to the configuration illustrated in FIG. 20. For example, some of the elements illustrated in FIG. 20 may be integrated with other elements, replaced with other elements having similar functions, or some elements may be omitted.

The electronic device 101 according to an embodiment may execute a camera application 2010 executed by the at least one processor 120. The camera application 2010 may include software configured to provide a video recording function and to receive a user input related to the video recording function.

The electronic device 101 according to an embodiment may include an interface unit 2020, a driver 2030, and a first encoder 2040. The interface unit 2020 may receive a request corresponding to a user input received through the camera application 2010, and deliver the received request to the driver 2030 of each hardware block. The interface unit 2020 may receive, from the driver 2030, a result of performing an operation corresponding to the request, and transmit the result to the camera application 2010 and the first encoder 2040. The interface unit 2020 may be configured as, for example, a hardware abstract layer (HAL) or a framework.

In an embodiment, the interface unit 2020 may include a receiver 2021, a controller 2022, a metadata generator 2023, and a transmitter 2024. The receiver 2021 may receive a request from the camera application 2010 and transfer the request to the controller 2022. The controller 2022 may perform a control operation for the multiple cameras included in the electronic device 101. For example, the controller 2022 may perform at least one of image quality processing for multiple cameras, an open/close timing of a camera operation, or size adjustment (scaling).

In an embodiment, the metadata generator 2023 may generate metadata including information on a video captured through the driver 2030. The metadata generator 2023 may generate the metadata in real time during video capturing. The metadata may include, for example, at least one of an auto-focus value related to the image sensor 230 included in the camera module 180 that is operating, an auto-exposure value, a parameter related to auto white balancing, or image quality-related information. For example, the metadata may include at least one of a value of a zoom ratio configured through a user interface or information on a region cropped from an image frame to acquire a preview image displayed during video capturing. For example, the metadata may include a timestamp for synchronizing a time point of video capturing. For example, the metadata may include region-of-interest (RoI) information on an object detected in an image through image recognition (e.g., scene detection algorithm). For example, the metadata may include sensor information (e.g., gyro sensor information, proximity sensor information, and illuminance values) acquired through the sensor module 176 included in the electronic device 101. For example, the metadata may include information on a result of performing speech recognition on speech included in video data. However, the disclosure is not limited to the above example of metadata. The metadata generator 2023 may transfer the generated metadata to the camera application 1020 or the first encoder 2040 through the transmitter 2024.

In an embodiment, the interface unit 2020 may omit storage of an image frame determined to be unnecessary for storage by preventing the image frame from being output to the first encoder 2040.

In an embodiment, the driver 2030 may drive hardware (e.g., a camera) to perform an operation corresponding to a request received from the controller 2022. For example, the driver 2030 may control a crop operation for an image frame acquired from a camera, or turning on/off an image stream output from the camera.

In an embodiment, the first encoder 2040 may include a track generator 2041 and a metadata track generator 2042. The first encoder 2040 may receive a buffer for storing an image frame acquired through each camera and metadata from the interface unit 2020. The first encoder 2040 may store first video data encoded based on the information received from the interface unit 2020. The first encoder 2040 may input the received buffer to the track generator 2041. The received metadata may be input to the metadata track generator 2042. The track generator 2041 may generate a track for each camera. The track generator 2041 may compress and store, in a track of each camera, an image frame acquired through the corresponding camera. For example, the track generator 2041 may store, in a user-captured image track, an image corresponding to a zoom ratio configured by a user during video capturing. The track generator 2041 may store, in a track corresponding to each camera, an image frame generated from the corresponding camera or image data required for camera switching and having a larger margin than the original. The metadata track generator 2042 may store, in the first video data, the metadata received from the interface unit 2020 in association with each image frame.

In an embodiment, a post-processing application 2015 may include software for performing a post-processing operation for the first video data stored in the first encoder 2040. If the first video data is stored (i.e., if video capturing is completed), the post-processing application 2015 may automatically execute a post-processing operation for the first video data or may execute the post-processing operation in response to a user input.

In an embodiment, when the post-processing application 2015 opens a file including the first video data, a decoder 2050 may decode the file including the first video data and input the decoded file to a post-processor 2060. The decoder 2050 may extract the metadata included in the first video data and input the extracted metadata to the post-processor 2060.

In an embodiment, the post-processor 2060 may perform a post-processing operation for the stored first video data. The post-processor 2060 may perform an operation of modifying at least a part of an operation performed by the controller 2022 of a camera during video capturing. For example, the post-processor 2060 may include at least one of a coordinate calculator 2061, a metadata selector 2062, a metadata analyzer 2063, a track determiner 2064, an image processor 2065, and a metadata generator 2066. The post-processor 2060 may further include an image improvement algorithm for improving the quality of an image included in the first video data. The metadata selector 2063 may select, from among the metadata, metadata to be applied to a post-processing operation according to a user event. The metadata analyzer 2063 may analyze the selected metadata. The image processor 2065 may perform image processing (e.g., image composition, scaling, and warping) by using hardware and/or software, based on a determination result for stored image data. The metadata generator 2066 may acquire information that the metadata generator 2023 of the interface unit 2020 has failed to recognize or determine, and generate metadata.

In an embodiment, since the metadata generator 2023 is required to perform video recording in real time, there is a limitation on the hardware performance of a scaler which is an element of the driver 2030. For example, the scaler may perform reading/writing in units of 2 pixels or more. In an embodiment, the coordinate calculator 2061 may perform coordinate calculation on a per-pixel basis by performing a software-based crop operation by using image frames included in the tracks included in the first video data. Therefore, the coordinate calculator 2061 may perform coordinate calculation for a zoom-in operation, a zoom-out operation, or a crop operation. The post-processor 2060 may generate, based on the calculated coordinates, a video that remains more natural even at the time point of camera switching than a video included in the user-captured image track of the first video data. The higher the zoom ratio used for video capturing, the greater the image movement caused by a one-pixel coordinate difference, and therefore accurate coordinate calculation may be required at higher zoom ratios. An image included in second video data is not cropped with reference to the center of the image, and may be subject to a zoom-in operation, a zoom-out operation, or a crop operation with reference to a different position by using the coordinates calculated based on the coordinate calculator 2061. In an embodiment, the coordinate calculator 2061 may determine a coordinate value for performing smoothing by removing fluctuation of a zoom curve representing a zoom ratio history indicating a history of a zoom ratio configured during video capturing.

In an embodiment, the metadata selector 2062 may determine metadata for generating second video data. For example, the metadata selector 2062 may determine at least a part selected by a user from the metadata included in the first video data through the post-processing application 2015. Alternatively, the metadata selector 2062 may acquire metadata from a metadata file input to the post-processing application 2015 according to a user input. The post-processor 2060 may acquire second video data in which an object corresponding to the determined metadata is included in an image.

In an embodiment, the metadata analyzer 2063 may interpret the metadata stored in the first video data to determine a method of using the tracks included in the first video data, based on a character string. For example, the metadata analyzer 2063 may prevent calculation of coordinates for cropping an image or performance of an operation for camera switching, in a case where there is no zoom operation or no brightness change, based on the metadata. In an embodiment, the metadata analyzer 2063 may perform speech recognition for speech data included in the first video data. The post-processor 2060 may acquire second video data, based on a result of performing speech recognition. For example, when speech data saying "there is a cat over there" is recognized, the post-processor 2060 may generate second video data including an image acquired by performing a zoom-in operation, based on the cat as a center in an image.

In an embodiment, the track determiner 2064 may determine an image frame to be used for acquiring second video data among at least one image frame included in the multiple tracks. For example, the track determiner 2064 may determine an image frame to be transferred to a second encoder 2045, based on the metadata included in the first video data and at least one image frame included in the multiple tracks.

In an embodiment, the image processor 2065 may determine a state of an image frame included in each track. The image processor 2065 may perform image processing for an image frame. For example, the image processor 2065 may enlarge or reduce an image by using a hardware scaler or a software scaler. The video processor 2065 may composite multiple image frames in order to provide a natural image switching at a time point at which a track having an image frame included in second video data is changed (i.e., at a time point at which a camera used for image capturing is switched). The image processor 2065 may perform image recognition for determining metadata. The image processor 2065 may perform an image processing operation for correcting a color difference between images captured through different cameras or for improving the quality of an image.

In an embodiment, the metadata generator 2066 included in the post-processor 2060 may add or update metadata, based on a result of image recognition performed by the image processor 2065.

In an embodiment, the post-processor 2060 may generate second video data, based on third video data received from an external device 2080 through a network 2070. The post-processor 2060 may add, as a new track of the first video data, third video data discovered based on the metadata included in the first video data. The post-processor 2060 may acquire second video data, based on the first video data including a new track added thereto.

In an embodiment, the second encoder 2045 may store the second video data as a video file, based on the image frames transferred from the post-processor 2060. In FIG. 20, the first encoder 2040 and the second encoder 2045 are illustrated as separate blocks, but the first encoder 2040 and the second encoder 2045 may be the same element.

An electronic device and an operation method therefor according to an embodiment are to improve the quality of a video captured by using multiple cameras.

An electronic device and an operation method therefor according to an embodiment are to efficiently store video data for enhancing the quality of a video.

The technical task to be achieved herein is not limited to that mentioned above, and other technical tasks that are not mentioned above may be clearly understood to a person having common knowledge in the technical field to which the disclosure belongs, based on the description of the disclosure.

An electronic device according to an embodiment may include a first camera, a second camera distinguished from the first camera, a memory 130 configured to store instructions, and at least one processor 120. The at least one processor 120 may be configured to execute the instructions to receive a first user input of requesting to capture a video(310). The at least one processor may be configured to store first video data including a first track and a second track, based on the user input (330). The first track may include at least a part of first image frames acquired through the first camera, and the second track may include at least a part of second image frames acquired through the second camera. The at least one processor may be configured to acquire second video data including an image frame acquired from the first track 510 or 810 or the second track 520 or 820 included in the stored first video data (340).

In an embodiment, the second camera may have a focal length different from that of the first camera. The electronic device may further include a third camera having a focal length different from those of the first camera and the second camera. The at least one processor may be further configured to receive a second user input of adjusting a zoom ratio of a captured image during the video capturing. The at least one processor may be further configured to, based on a zoom ratio determined by the second user input, select one of the first camera, the second camera, or the third camera. The at least one processor may be further configured to store the first video data further including a user-captured image track 500 or 800 and a third track 530 or 830. The user-captured image track 500 or 800 may include an image frame acquired through the selected camera, and the third track 530 or 830 may include at least some of third image frames acquired through the third camera.

In an embodiment, the at least one processor may be further configured to, based on the determined zoom ratio, determine whether to omit storage of an image frame in at least one of the first track, the second track, or the third track. The at least one processor may be further configured to store the first video data in which at least one image frame is omitted for at least one of the first track, the second track, or the third track, based on determination of whether to omit the storage.

In an embodiment, the first camera may have a focal length longer than that of the second camera. The second camera may have a focal length longer than that of the third camera.

In an embodiment, the at least one processor may be further configured to, with regard to the stored first video data, determine a modified zoom ratio, based on a zoom ratio history including a history of zoom ratio changes during capturing of the first video data. The at least one processor may be further configured to select one of the first track, the second track, or the third track, based on the modified zoom ratio. The at least one processor may be further configured to acquire the second video data, based on an image frame included in the selected track and the modified zoom ratio.

In an embodiment, the at least one processor may be further configured to determine a starting zoom ratio and a final zoom ratio, based on the zoom ratio history. The at least one processor may be further configured to determine the modified zoom ratio by smoothing the history of zoom ratio changes included in the zoom ratio history, based on the starting zoom ratio and the final zoom ratio.

In an embodiment, the at least one processor may be further configured to, based on the selected camera, determine whether to omit storage of an image frame in at least one of the first track, the second track, or the third track. The at least one processor may be further configured to store the first video data in which at least one image frame is omitted for at least one of the first track, the second track, or the third track, based on determination of whether to omit the storage.

In an embodiment, the at least one processor may be further configured to store the first video data to include metadata for each track included in the first video data.

In an embodiment, the at least one processor may be configured to perform image recognition for at least one of a first image frame or a second image frame from the first video data. The at least one processor may be further configured to update the metadata, based on a result of the image recognition. The at least one processor may be further configured to generate the second video data to include the updated metadata.

In an embodiment, the at least one processor may be configured to select one of the multiple tracks, based on the metadata. The at least one processor may be further configured to acquire the second video data, based on an image frame included in the selected track.

In an embodiment, the metadata may include at least one of a timestamp, a parameter related to an operation of a first image sensor included in the first camera, a parameter related to an operation of a second image sensor included in the second camera, first region-of-interest information on an object detected in at least some of the first image frames, second region-of-interest information on an object detected in at least some of the second image frames, or sensor information acquired through a sensor included in the electronic device.

In an embodiment, the electronic device may further include a communication circuit (e.g., the communication module 190 in FIG. 1) configured to communicate with an external device. The at least one processor may be configured to receive third video data including a fourth track including at least one image frame from the external device through the communication circuit, based on the metadata. The at least one processor may be configured to acquire the second video data, based on the first video data and the third video data.

A method of operating an electronic device according to an embodiment may include receiving a first user input of requesting to capture a video. The method may further include storing first video data including a first track and a second track, based on the user input. The method may further include acquiring second video data including an image frame acquired from the first track or the second track included in the stored first video data. The first track may include at least a part of first image frames acquired through the first camera, and the second track may include at least a part of second image frames acquired through the second camera.

In an embodiment, the storing of the first video data may include receiving a second user input of adjusting a zoom ratio of a captured image during capturing of a video in response to the first user input. The storing of the first video data may further include, based on a zoom ratio determined by the second user input, selecting one of the first camera, the second camera, or a third camera of the electronic device. The storing of the first video data may further include storing the first video data including a user-captured image track, the first track, the second track, and a third track. The user-captured image track may include an image frame acquired through the selected camera, and the third track may include at least some of third image frames acquired through the third camera.

In an embodiment, the storing of the first video data including the user-captured image track, the first track, the second track, and the third track may include, based on the determined zoom ratio, determining whether to omit storage of an image frame in at least one of the first track, the second track, or the third track. The storing of the first video data including the user-captured image track, the first track, the second track, and the third track may include storing the first video data in which at least one image frame is omitted for at least one of the first track, the second track, or the third track, based on determination of whether to omit the storage.

In an embodiment, the acquiring of the second video data may include, with regard to the stored first video data, determining a modified zoom ratio, based on a zoom ratio history including a history of zoom ratio changes during capturing of the first video data. The acquiring of the second video data may further include selecting one of the first track, the second track, or the third track, based on the modified zoom ratio. The acquiring of the second video data may further include acquiring the second video data, based on an image frame included in the selected track and the modified zoom ratio.

In an embodiment, the storing of the first video data may include storing the first video data to include metadata for each track included in the first video data.

In an embodiment, the acquiring of the second video data may include performing image recognition for at least one of a first image frame or a second image frame from the first video data. The acquiring of the second video data may further include updating the metadata, based on a result of the image recognition. The acquiring of the second video data may further include generating the second video data to include the updated metadata.

In an embodiment, the acquiring of the second video data may include selecting one of the multiple tracks, based on the metadata. The acquiring of the second video data may further include acquiring the second video data, based on an image frame included in the selected track.

In an embodiment, the acquiring of the second video data may include receiving third video data including a fourth track including at least one image frame from the external device, based on the metadata. The acquiring of the second video data may further include acquiring the second video data, based on the first video data and the third video data.

A non-transitory computer-readable recording medium according to an embodiment may record a computer program, when executed, causing an electronic device to perform the above method.

Various embodiments may provide an electronic device and an operation method therefor, which enable improvement of the quality of a video captured by using multiple cameras.

Various embodiments may provide an electronic device and an operation method therefor, which enable efficient storage of video data.

Advantageous effects obtainable from the disclosure may not be limited to the above-mentioned effects, and other effects which are not mentioned herein may be clearly understood from the following description by those skilled in the art to which the disclosure pertains.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

In the disclosure, the term "unit" or "module" may refer to a hardware component such as a processor or circuit, and/or a software component executed by a hardware component such as a processor.

The "unit" or "module" may be stored in an addressable storage medium and may be implemented by a program executable by a processor. For example, the "unit" or "module" may be implemented by elements such as software elements, object-oriented software elements, class elements, and task elements, processes, functions, attributes, procedures, sub-routines, segments of program codes, drivers, firmware, micro-codes, circuits, data, databases, data structures, tables, arrays, and parameters.

Particular implementations described herein are merely an embodiment, and do not limit the scope of the disclosure in any way. For the brevity and conciseness of the specification, a description of conventional electronic components, control systems, software, and other functional aspects of these systems may be omitted.

In addition, as used herein, "including at least one of a, b, or c" may refer to "including only a", "including only b", "including only c", or "including a combination of two of them (including a and b, including b and c, including a and c, or including all of a, b, and c).

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An electronic device comprising:
a first camera;
a second camera distinguished from the first camera;
a memory configured to store instructions; and
at least one processor,
wherein the at least one processor is configured to execute the instructions to:
receive a first user input for requesting to capture a video;
based on the user input, store first video data including a first track and a second track, the first track including at least a part of first image frames acquired through the first camera, and the second track including at least a part of second image frames acquired through the second camera; and
acquire second video data including an image frame acquired from the first track or the second track of the stored first video data.

2. The electronic device of claim 1, wherein the second camera has a focal length different from the first camera,
wherein the electronic device further comprises a third camera having a focal length different from the first camera and the second camera,
wherein the at least one processor is further configured to:
receive a second user input for adjusting a zoom ratio of an image captured during the video capturing;
based on a zoom ratio determined by the second user input, select one of the first camera, the second camera, or the third camera; and
store the first video data further including a user-captured image track and a third track, and
wherein the user-captured image track includes an image frame acquired through the selected camera, and the third track includes at least some of third image frames acquired through the third camera.

3. The electronic device of claim 2, wherein the at least one processor is further configured to:
based on the determined zoom ratio, determine whether to omit storing an image frame in at least one of the first track, the second track, or the third track; and
based on the determination of whether to omit storing the image frame, store the first video data, from which at least one image frame is omitted, in at least one of the first track, the second track, or the third track.

4. The electronic device of one of claims 2 or 3, wherein the first camera has a longer focal length than the second camera, and
wherein the second camera has a longer focal length than the third camera.

5. The electronic device of claim 2, wherein the at least one processor is further configured to:
for the stored first video data, determine a modified zoom ratio, based on a zoom ratio history including a history of zoom ratio changes during capturing of the first video data;
based on the modified zoom ratio, select one of the first track, the second track, or the third track; and
based on an image frame included in the selected track and the modified zoom ratio, acquire the second video data.

6. The electronic device of claim 5, wherein the at least one processor is further configured to:
determine a starting zoom ratio and a final zoom ratio from the zoom ratio history; and
determine the modified zoom ratio by smoothing the history of zoom ratio changes included in the zoom ratio history, based on the starting zoom ratio and the final zoom ratio.

7. The electronic device of claim 2, wherein the at least one processor is further configured to:
based on the selected camera, determine whether to omit storing an image frame in at least one of the first track, the second track, or the third track; and
based on the determination of whether to omit storing the image frame, store the first video data, from which at least one image frame is omitted, in at least one of the first track, the second track, or the third track,.

8. The electronic device of claim 1 or 2, wherein the at least one processor is further configured to store the first video data to include metadata for each track included in the first video data.

9. The electronic device of claim 8, wherein the at least one processor is further configured to:
perform image recognition for at least one of the first image frames or the second image frames from the first video data;
based on a result of the image recognition, update the metadata; and
generate the second video data to include the updated metadata.

10. The electronic device of claim 8, wherein the at least one processor is further configured to:
based on the metadata, select one of the plurality of tracks; and
based on an image frame included in the selected track, acquire the second video data.

11. The electronic device of claim 8, wherein the metadata comprises at least one of a timestamp, a parameter related to an operation of a first image sensor included in the first camera, a parameter related to an operation of a second image sensor included in the second camera, first region-of-interest information for an object detected from at least some of the first image frames, second region-of-interest information for an object detected from at least some of the second image frames, or sensor information acquired through a sensor included in the electronic device.

12. The electronic device of claim 8, further comprising a communication circuit configured to communicate with an external device,
wherein the at least one processor is configured to:
based on the metadata, receive third video data including a fourth track including at least one image frame from the external device through the communication circuit; and
based on the first video data and the third video data, acquire the second video data.

13. A method of operating an electronic device, the method comprising:
receiving a first user input for requesting to capture a video;
based on the user input, storing first video data including a first track and a second track; and
acquiring second video data including an image frame acquired from the first track or the second track included in the stored first video data,
wherein the first track includes at least a part of first image frames acquired through a first camera of the electronic device, and the second track includes at least a part of second image frames acquired through a second camera distinguished from the first camera.

14. The method of claim 13, wherein the storing of the first video data further comprises:
receiving a second user input for adjusting a zoom ratio of an image captured during capturing of a video in response to the first user input;
based on a zoom ratio determined by the second user input, selecting one of the first camera, the second camera, or a third camera of the electronic device; and
storing the first video data including a user-captured image track, the first track, the second track, and a third track, and
wherein the user-captured image track includes an image frame acquired through the selected camera, and the third track includes at least some of third image frames acquired through the third camera.

15. The method of claim 14, wherein the storing of the first video data including the user-captured image track, the first track, the second track, and the third track comprises:
based on the determined zoom ratio, determining whether to omit storing an image frame in at least one of the first track, the second track, or the third track; and
based on the determination of whether to omit storing the image frame, storing the first video data, from which at least one image frame is omitted, in at least one of the first track, the second track, or the third track.
